# EUROPEAN PATENT APPLICATION

(11) **EP 2 130 668 A1**
(43) Date of publication of application: **09.12.2009**
(21) Application number: 08104230.1
(22) Date of filing: 03.06.2008
(51) Int. Cl.: B29D 30/06

(54) **Method, apparatus and system for processing of vehicle tyres, and vehicle tyre**

(71) Applicant: Carnehammar, Lars Bertil, 8050 Zürich (CH)
(72) Inventor: Immler, Michael, 87509 Immenstadt (DE)
(74) Representative: Plougmann & Vingtoft A/S

(57) **Abstract**

A method of manufacturing a vehicle tyre, wherein a removable layer (440) is located between a surface area of the vehicle tyre (40) and a curing mould (460) or a curing bladder (470) forming a hollow of the vehicle tyre; characterized in that the removable layer (440) comprises a first structured surface facing the surface area of the vehicle tyre; and the first structured surface imprints the surface area of the vehicle tyre (40). An apparatus, and a system, for manufacturing a vehicle tyre according to the method. A vehicle tyre manufactured according to the method.

## Description

### Field of the Invention

Embodiments of the invention described herein relate generally to processing of vehicle tyres, and more particularly to a method, an apparatus and a system for manufacturing vehicle tyres, for example pneumatic tyres, and a vehicle tyre.

### Background of the Invention

Driving experience of a vehicle is determined, among other factors, by surface quality of the road and quality, e. g. homogeneity or uniformity, of the vehicle's wheels. A vehicle wheel is a system comprising a tyre, a rim and a valve. Nonuniformity or inhomogeneity of the vehicle wheel may result from an uneven mass distribution, i. e. unbalance, of a tyre or a rim or both, a geometrical abnormality, for example axial run-out or radial run-out or both, of the tyre or the rim or both, or a variation in axial, radial or tangential stiffness (axial-force fluctuation, radial-force fluctuation, tangential-force fluctuation) of the tyre or the rim or both, or off-centre mounting of the tyre on the rim or the rim on a vehicle's axle or both. Balancing the wheel improves the driving experience, as it compensates for the uneven mass distribution.

Tyres, for example bias tyres (bias ply tyres, cross ply tyres, diagonal tyres, diagonal ply tyres), bias-belted tyres, radial tyres (radial ply tyres), for example run-flat tyres, are generally manufactured by building a green tyre as a series of layers on a tyre-building drum, and curing the green tyre in a curing press using an expandable curing bladder inserted into the green tyre and forcing the green tyre into a curing mould of the curing press. Before heating, a release agent, for example a silicone-based release agent, is applied to the green tyre or the curing mould and the curing bladder. The release agent separates the tyre from the curing mould and curing bladder. During the curing, the layers are bonded, and a tread on an outer circumference of the tyre is formed by indentations of the curing mould. After the curing, the tyre is released from the curing press, eased by the release agent.

DE patent application 198 53 691 discloses a method for introducing tyrebalancing substance as internal circumferential gel bead. The substance characteristic, shape, weight, geometry and its deposition locations are defined. The internal surface of the tyre exhibits defined shape and geometry. One or more endless strands may be employed. Strand cross section may be circular, semicircular, flattened, triangular, quadrilateral or polygonal. The one or more strands are distributed over the entire circumference, or just part of it, or both types of distribution take place. Strand portions are applied opposite the valve, when mounted on the rim. They are applied at or away from the equatorial plane, symmetrically, or else asymmetrically. The substance is injected through the valve in set quantity. A gel with a defined viscosity, thixotropy, long term stability, and compatibility with the tyre's inner surface is used. The tyre has one or more circumferential grooves, optionally between beads, to accept the substance.

The balancing substance may be accommodated in a tube-like hallow part glued along the internal circumference.

Thus, when a viscous, for example thixotropic, balancing substance, for example composition, is used for balancing a vehicle wheel comprising a tyre, it may be advantageous to insert into the tyre and bond to an inner liner of the tyre, for example by gluing, a part, such as a tube-like hallow part accommodating the balancing substance or a layer-like foam part delimiting strands of the balancing substance.

As the inner liner is contaminated with release agent employed during manufacturing of the tyre and inhibiting bonding, the inner liner needs to be cleaned, for example mechanically cleaned and chemically cleaned. The cleaning consumes time and has a negative impact on the environment.

WO 2008/009696A1 disclosed an invention relating to automobile tyres or tyre assemblies or parts thereof suitable for being balanced by introduction therein of a thixotropic balancing gel, wherein surfaces of the tyre or tyre assembly or part thereof which are intended to be in contact with the balancing gel are provided with a surface nanostructure with an average surface roughness in the range of 1-1000 nm. The surface nanostructure will enable the thixotropic balancing gel to move to the location, where it balances the tyre, significantly quicker than if the surface in question did not have the surface nanostructure.

US patent application 2004/0103967 and corresponding EP patent application 1 435 286 disclose a bond of a rubbery component to a virgin surface of a tire's cured innerliner which virgin surface has never been contaminated by the remnants of a release agent left after buffing with a wire brush and solvent-cleaning the cured innerliner, being unexpectedly stronger than a bond of the component to the contaminated but "cleaned surface", cleaned as indicated. Therefore, a pneumatic tire is provided with a virgin surface protected against contamination by a release agent at the curing temperature of the tire; protection is provided by a self-supporting barrier film of sulfur non-vulcanizable, expandable, thermoformable synthetic resinous material; and, a method is provided for maintaining a virgin cured surface within all or part of either the exterior or interior of a pneumatic tire's rubber carcass which is conventionally cured. The barrier film which is substantially inextensible at ambient temperature, is removable without tearing into pieces from the protected surface of the cured tire. When the interior surface is provided by an innerliner, any component to be included within the interior of the carcass may be adhesively secured to the virgin surface of the innerliner more securely than has been heretofore possible.

Thus, use of an adherent, removable barrier film may prevent contamination of a portion of a tyre's surface by a release agent used in a curing press. As a consequence, the portion is clean, and further cleaning of the portion may not be necessary, and as a result, bonding of a rubbery component to the portion may be simplified.

However, for securely bonding parts of various types to a surface of a tyre, the bonding capability must be as high as possible.

Thus, tyre manufactures need a method, an apparatus and a system for efficiently, and preferably predominantly automatically, manufacturing vehicle tyres having an improved bonding capability.

For these and other reasons, there is a need for the invention as set forth in the following in the embodiments.

### Summary of the Invention

The invention aims to provide a method, an apparatus and a system for manufacturing vehicle tyres having an improved bonding capability, and a vehicle tyre having an improved bonding capability.

An aspect of the invention is a method of manufacturing a vehicle tyre, wherein a removable layer is located between a surface area of the vehicle tyre and a curing mould or a curing bladder forming a hollow of the vehicle tyre **characterized in that** the removable layer comprises a first structured surface facing the surface area of the vehicle tyre; and the first structured surface imprints the surface area of the vehicle tyre. As a consequence, the surface area of the vehicle tyre is textured, surface roughness is increased, and, as a result, an active surface, that can take part in a process, for example a chemical process, is increased for a given size of surface area of the vehicle tyre, bonding is improved, release agents may be saved. As a further consequence, roughening of the surface area may not be necessary, and, as a result, time is saved, cleaning agent is saved, environmental protection and employment protection are improved, risk of damaging the vehicle tyre as well as resulting material defect liability and product liability may be avoided, and, ultimately, costs relating to manufacturing of the vehicle tyre are reduced.

Another aspect of the invention is a method, wherein the surface area of the vehicle tyre is on an interior surface of the vehicle tyre. As a result, cleaning of the interior surface, that may be difficult and cumbersome, may be avoided.

Another aspect of the invention is a method, wherein the surface area of the vehicle tyre is on an inner liner of the vehicle tyre. As a result, a part, for example a delimiter, a noise-reduction layer, a repair patch or a balance pad, may be mounted onto the inner liner.

Another aspect of the invention is a method, wherein the removable layer comprises a second structured surface facing the curing mould or the curing bladder. As a consequence, deairing between the vehicle tyre and the curing mould or the curing bladder during curing is simplified. As a result, surface structure and construction of the curing mould or the curing bladder may be simplified. As a further result, wear and tear of the curing bladder may be reduced, and costs relating to the curing bladder may be reduced.

Another aspect of the invention is a method, wherein the removable layer is expandable by a factor between approximately 2 and approximately 10, for example between approximately 4 and approximately 8, preferably approximately 6. As a result, the removable layer may adapt to expansion of vehicle tyre during manufacturing. The expansion may relate to a circumference or a diameter of the vehicle tyre.

Another aspect of the invention is a method, wherein the removable layer is expandable in a first direction; or the removable layer is expandable in a second direction; both.

Another aspect of the invention is a method, wherein the first direction is approximately perpendicular to the second direction.

Another aspect of the invention is a method, wherein the removable layer is located in or on the vehicle tyre, such that the first direction is approximately along a running direction of the vehicle tyre; or the removable layer is located in or on the vehicle tyre, such that the second direction is approximately perpendicular to the running direction of the vehicle tyre; or both.

Another aspect of the invention is a method, wherein the removable layer is located in or on the vehicle tyre, such that the first direction is approximately diagonal to a running direction of the vehicle tyre; or the removable layer is located in or on the vehicle tyre, such that the second direction is approximately diagonal to the running direction of the vehicle tyre; or both. As a result, both expandability in the first direction and expandability in the second direction may be utilized for adapting to expansion of vehicle tyre during manufacturing.

Another aspect of the invention is a method, wherein the removable layer is disposable, preferably easily disposable.

Another aspect of the invention is a method, wherein the removable layer is a fabric, for example a textile, such as a cloth; and the first structured surface is structured by the fabric.

Another aspect of the invention is a method, wherein the removable layer is a sheet, for example a foil, such as a film; and the first structured surface is structured by forming the sheet, or particles, such as nano particles, deposited on the sheet.

Another aspect of the invention is a method, wherein the removable layer is endless, possibly spooled material, or tailored, for example pre-cut, material.

Another aspect of the invention is a method, wherein the removable layer comprises natural fibres, for example cellulose fibres, such as cotton fibres.

Another aspect of the invention is a method, wherein the removable layer comprises synthetic material, for example synthetic fibres, preferably lactam-based fibres or cellulose-based fibres, such as rayon fibres. As a consequence, the removable layer may remain in the vehicle tyre until need arises, for example before a repair patch is mounted for repairing the vehicle tyre.

Another aspect of the invention is a method, wherein the removable layer comprises metal, for example metal fibres or filaments, preferably brass filaments or steel filaments, such as stainless-steel filaments.

Another aspect of the invention is a method, wherein the removable layer is impenetrable for release agents, for example silicone-based release agents.

Another aspect of the invention is a method, wherein the removable layer is impregnated with a release agent, for example a silicone-based release agent.

Another aspect of the invention is a method, wherein the first structured surface is impregnated with the release agent; or the second structured surface is impregnated with the release agent; or both.

Another aspect of the invention is a method, wherein the removable layer is placed on a tyre-building drum.

Another aspect of the invention is a method, wherein the removable layer is initially placed on the tyre-building drum before is the vehicle tyre is built as a series of layers.

Another aspect of the invention is a method, wherein the removable layer is initially placed on a first layer, for example an inner liner, of the series of layers; and the removable layer is placed on the tyre-building drum together with the first layer.

Another aspect of the invention is a method, wherein the removable layer is placed in the vehicle tyre.

Another aspect of the invention is a method, wherein the removable layer is placed in the curing mould or on the curing bladder.

Another aspect of the invention is a method, wherein a first end of the removable layer overlaps a second end of the removable layer. As a result, removal of the removable layer is simplified.

Another aspect of the invention is a method, wherein the removable layer remains in the vehicle tyre until the surface area of the vehicle tyre is used. As a result, influence of dirt, dust, humidity and oxidation may be impaired or at least reduced.

Another aspect of the invention is a method, further comprising removing the removable layer from the vehicle tyre. As a result, the surface area of the vehicle tyre is activated.

Another aspect of the invention is a method, wherein the surface area of the vehicle tyre is structured for mounting a part, for example a delimiter, a noise-reduction layer, a repair patch or a balance pad, to the surface area of the vehicle tyre.

Another aspect of the invention is a method, further comprising mounting the part to the surface area of the vehicle tyre. As a consequence, bonding between the surface area of the vehicle tyre and the part is improved owing to an increased active surface resulting from an increased surface roughness.

Another aspect of the invention is a method, wherein the surface area of the vehicle tyre is structured for accommodating a balancing substance, for example a thixotropic balancing substance. As a consequence, movability of the balancing substance may be improved.

Another aspect of the invention is a method, wherein the surface area of the vehicle tyre indicates structural features of the vehicle tyre, for example where the vehicle tyre may be repaired, invariable features of the vehicle tyre, for example make or type or size or mould serial number or, preferably, a combination thereof, or variable features of the vehicle tyre, for example manufacturing date or batch number or both. As a consequence, the method may provide an inexpensive, flexible and secure means of marking the vehicle tyre.

A further aspect of the invention is an apparatus for manufacturing a vehicle tyre according to the method.

Yet a further aspect of the invention is a system for manufacturing a vehicle tyre according to the method.

Yet a further aspect of the invention is a vehicle tyre manufactured according to the method.

Brief Description of the Several Views of the Drawing(s)

While the specification concludes with claims particularly pointing out and distinctly claiming that which is regarded as the invention, a more particular description of the invention will be rendered by reference to specific embodiments thereof, which are depicted in the appended drawings, in order to illustrate the manner in which embodiments of the invention are obtained. Understanding that these drawings depict only typical embodiments of the invention, that are not necessarily drawn to scale, and, therefore, are not to be considered limiting of its scope, embodiments will be described and explained with additional specificity and detail through use of the accompanying drawings in which:
Fig. 1 shows a simplified, partial cross-sectional view of a vehicle tyre 10;
Figs 2a) and 2b) show schematic views of building and cambering of a green tyre according to the preferred embodiment of the invention;
Figs 3a) and 3b) show schematic views of building and cambering of a green tyre according to another embodiment of the invention;
Figs 4a), 4b) and 4c) show simplified, partial cross-sectional views of curing of a green tyre according to the preferred embodiment of the invention;
Figs 5a), 5b), 5c) and 5d) show simplified, partial cross-sectional views of curing of a green tyre according to another embodiment of the invention;
Figs 6a), 6b), 6c) and 6d) show simplified, partial cross-sectional views of curing of a green tyre according to yet another embodiment of the invention;
Figs 7a), 7b), 7c) and 7d) show simplified, partial cross-sectional views of curing of a green tyre according to yet another embodiment of the invention; and
Figs 8a) and 8b) show schematic views of an expandable textile as a removable layer according to the preferred embodiment of the invention.

### Detailed Description of the Invention

In the following detailed description of the embodiments, reference is made to the accompanying drawings which form a part hereof and show, by way of illustration, specific embodiments in which the invention may be practiced. In the drawings, like numerals describe substantially similar components throughout the several views. The embodiments are intended to describe aspects of the invention in sufficient detail to enable those of skill in the art to practice the invention. Other embodiments may be utilized and structural, logical or electrical changes or combinations thereof may be made without departing from the scope of the invention. Moreover, it is to be understood, that the various embodiments of the invention, although different, are not necessarily mutually exclusive. For example, a particular feature, structure or characteristic described in one embodiment may be included within other embodiments. Furthermore, it is to be understood, that embodiments of the invention may be implemented using different technologies. Also, the term "exemplary" is merely meant as an example, rather than the best or optimal. The following detailed description is, therefore, not to be taken in a limiting sense, and the scope of the invention is defined only by the appended claims, along with the full scope of equivalents to which such claims are entitled.

Reference will be made to the drawings. In order to show the structures of the embodiments most clearly, the drawings included herein are diagrammatic representations of inventive articles. Thus, actual appearance of the fabricated structures may appear different while still incorporating essential structures of embodiments. Moreover, the drawings show only the structures necessary to understand the embodiments. Additional structures known in the art have not been included to maintain clarity of the drawings. It is also to be understood, that features and/or elements depicted herein are illustrated with particular dimensions relative to one another for purposes of simplicity and ease of understanding, and that actual dimensions may differ substantially from that illustrated herein.

In the following description and claims, the terms "include", "have", "with" or other variants thereof may be used. It is to be understood, that such terms are intended to be inclusive in a manner similar to the term "comprise".

In the following description and claims, the terms "coupled" and "connected", along with derivatives such as "communicatively coupled" may be used. It is to be understood, that these terms are not intended as synonyms for each other. Rather, in particular embodiments, "connected" may be used to indicate, that two or more elements are in direct physical or electrical contact with each other. However, "coupled" may also mean that two or more elements are not in direct contact with each other, but yet still co-operate or interact with each other.

In the following description and claims, terms, such as "upper", "lower", "first", "second", etc., may be only used for descriptive purposes and are not to be construed as limiting. The embodiments of a device or article described herein can be manufactured, used, or shipped in a number of positions and orientations.

In the present context, the term "nanostructure" is to be understood as referring to any surface structure which has surface details of a size in the nanometre range.

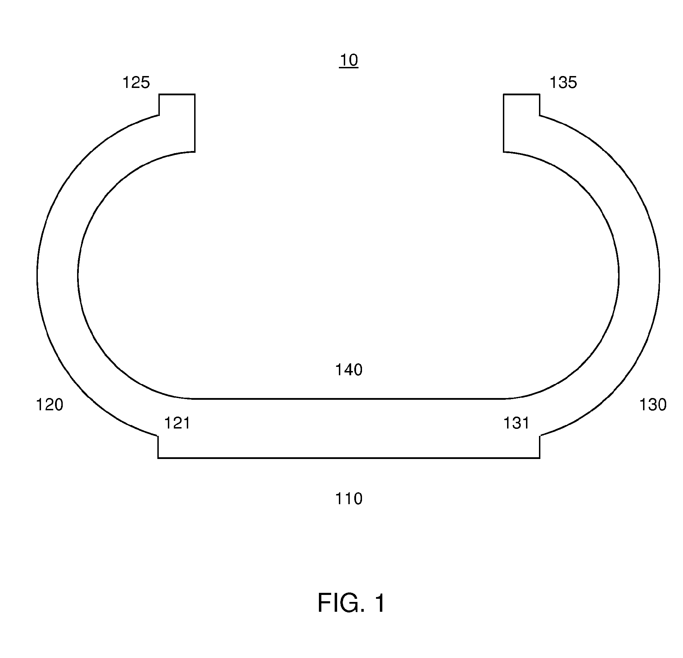

Fig. 1 shows a simplified, partial cross-sectional view of a vehicle tyre 10. The vehicle tyre 10 comprises a circumferential tread surface 110 defining a tread face on an outer surface, a first sidewall portion 120 with a first shoulder portion 121 and a first bead portion 125, a second sidewall portion 130 with a second shoulder portion 131 and a second bead portion 135 axially spaced from the first bead portion 125 to form a toroidal shape and an annular hollow. The vehicle tyre 10 comprises an inner side 140, formed, for example, by an inner liner. The inner liner may comprise butyl. The tyre 10 may be a pneumatic tyre and comprise a pressurized gas or mixture of gases, for example atmospheric air (not shown). The vehicle tyre 10 may be intended for a motorized vehicle, for example a car, bus, light truck, heavy truck or motorcycle, or an aircraft.

A method, i. e. process, of manufacturing the vehicle tyre 10 shown in Figure 1 generally comprises building a green tyre on a tyre-building drum, cambering the green tyre, and curing, i. e. vulcanising, the green tyre in a curing press into the vehicle tyre 10. As will be described in more detail, the method further comprises locating, at a suitable point in time, i. e. a suitable stage of the method, a removable layer between a surface area of the vehicle tyre 10 and a curing bladder or a curing mould of the curing press; wherein the removable layer comprises a first structured surface facing the surface area of the vehicle tyre 10; and the first structured surface imprints the surface area of the vehicle tyre 10. Building the green tyre on the tyre-building drum comprises tailoring layers of low-modulus rubber and layers of high-modulus cords, and placing, generally starting with a layer of low-modulus rubber forming the inner liner, a series of these layers according to a specification of the vehicle tyre 10 on the tyre-building drum, such that the layers of high-modulus cords are generally embedded in the layers of low-modulus rubber.

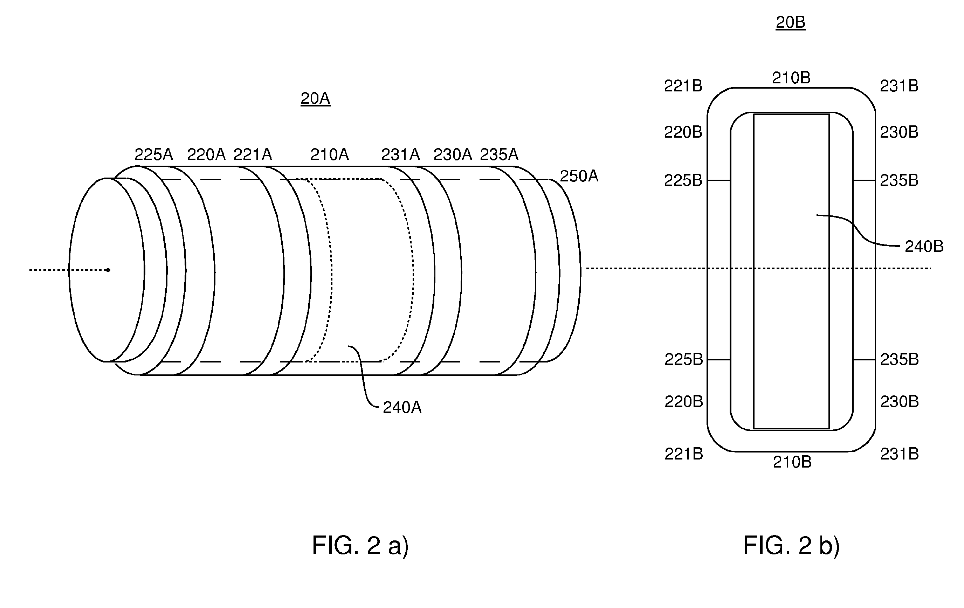

Figs 2a) and 2b) show schematic views of building and cambering of a green tyre 20A, 20B according to the preferred embodiment of the invention. Fig. 2a) shows a perspective schematic view of building of the green tyre 20A. A rotatable tyre-building drum 250A for the preferred embodiment of the invention is cylindrical and may preferably have a constant diameter approximately corresponding with a diameter of the first and second bead portions 125, 135 of the vehicle tyre 10. A removable layer 240A is placed on the tyre-building drum 250A. Fig. 2b) shows a cross-sectional schematic view of cambering of the green tyre 20B. On the tyre-building drum 250A for the preferred embodiment of the invention, areas 225A, 220A, 221A, 210A, 231A, 230A, 235A of the green tyre 20A, 20B becoming the first bead portion 225B, the first sidewall portion 220B, the first shoulder portion 221B, the circumferential tread surface 210B, the second shoulder portion 231B, the second sidewall portion 230B and the second bead portion 235B, respectively, are axially lined up along the tyre-building drum 250A and have approximately same diameters. The removable layer 240A is situated between the tyre-building drum 250A and the area 210A becoming the circumferential tread surface 210B. Cambering the green tyre 20A, 20B may preferably comprise expanding the area 210A becoming the circumferential tread surface 210B, i. e. increasing a diameter of the circumferential tread surface 210A. Expansion may range between approximately 10 % and approximately 500 %, for example between approximately 20 % and approximately 250 %, preferably between approximately 50 % and approximately 150 %, such as approximately 100 %. As a consequence, areas becoming the first and second sidewall portions 220B, 230B are gradually expanded, and the first and second shoulder portions 221B, 231B are also at least partially expanded, and the first and second bead portions 225B, 235B are axially spaced to form the toroidal shape and the annular hollow of the vehicle tyre 10. The removable layer 240A, 240B is expanded with the area 210A becoming the circumferential tread surface 210B.

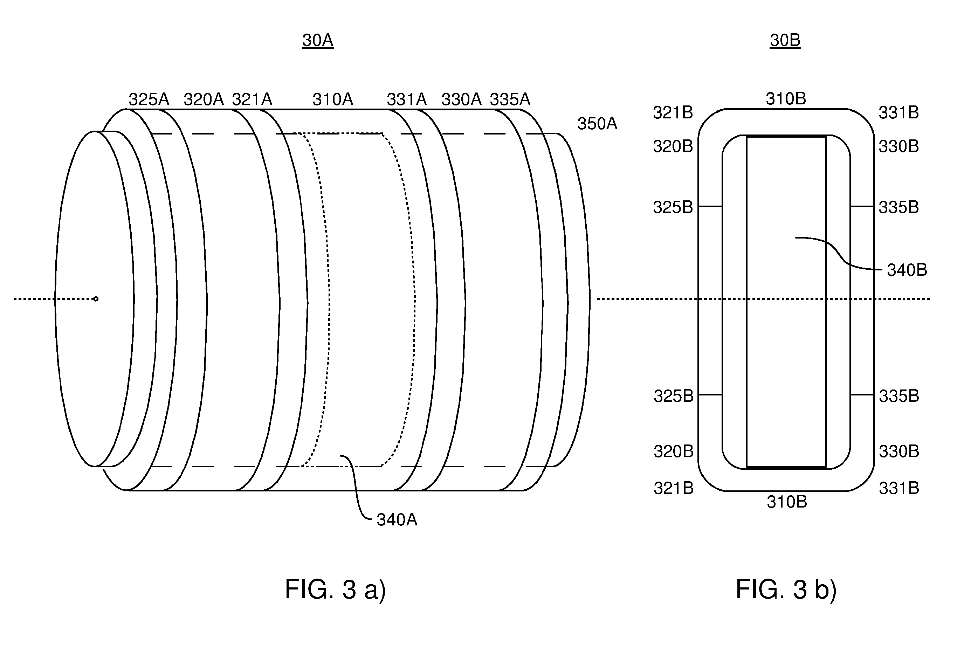

Figs 3a) and 3b) show schematic views of building and cambering of a green tyre 30A, 30B according to another embodiment of the invention. Fig. 3a) shows a perspective schematic view of building of the green tyre 30A. A rotatable tyre-building drum 350A for the other embodiment of the invention is cylindrical and may have a constant diameter approximately corresponding with a diameter of the circumferential tread surface 110 of the vehicle tyre 10. A removable layer 340A is placed on the tyre-building drum 350A. Fig. 3b) shows a cross-sectional schematic view of cambering of the green tyre 30B. Thus, on the tyre-building drum 350B for the other embodiment of the invention, areas 325A, 320A, 321A, 310A, 331A, 330A, 335A of the green tyre 30A, 30B becoming the first bead portion 325B, the first sidewall portion 320B, the first shoulder portion 321B, the circumferential tread surface 310B, the second shoulder portion 331B, the second sidewall portion 330B and the second bead portion 335B, respectively, are also axially lined up along the tyre-building drum 350A and have approximately same diameters. The removable layer 340A is situated between the tyre-building drum 350A and the area 310A becoming the circumferential tread surface 310B. Cambering the green tyre 30A, 30B may comprise, after removing the green tyre 30A, 30B from the tyre-building drum 350A for the other embodiment of the invention, folding in the areas 320A, 321A, 325A and 330A, 331A, 335A becoming the first sidewall portion 320B with the first shoulder portion 321B and the first bead portion 325B, and the second sidewall portion 330B with the second shoulder portion 331B and the second bead portion 335B, i. e. compacting the bead portions 325B, 335B, the sidewall portions 320B, 330B and the shoulder portions 321B, 331B and reducing the diameter of the first and second bead portions 325B, 335B. Reduction may range between approximately 10 % and approximately 90 %, for example between approximately 20 % and approximately 80 %, preferably between approximately 30 % and approximately 70 %, such as approximately 50 %. In the other embodiment, the removable layer 340A, 340B is neither expanded nor compacted substantially.

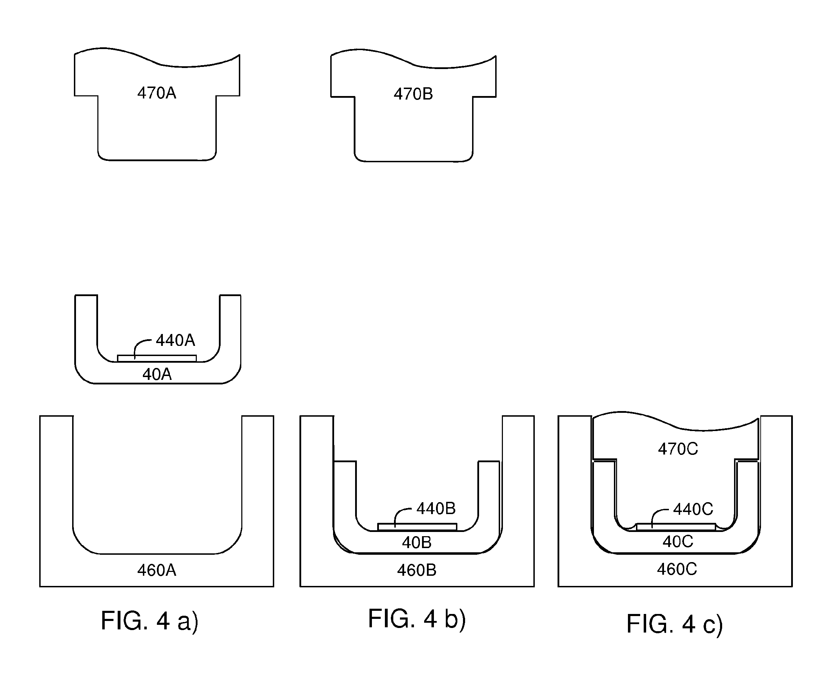

Figs 4a), 4b) and 4c) show simplified, partial cross-sectional views of curing of a green tyre 40A, 40B, 40C according to the preferred embodiment of the invention. The green tyre 40A, 40B, 40C may, for example, be build and cambered as described with reference to Fig. 2 or Fig. 3, and comprises the removable layer 440A, 440B, 440C. Curing the green tyre 40A, 40B, 40C in the curing press into the vehicle tyre 10 comprises inserting the green tyre 40A into the curing mould 460A for forming an exterior surface including the circumferential tread surface 110 of the vehicle tyre 10 as shown from Fig. 4a) to Fig. 4b), inserting the curing bladder 470B forming the hollow of the vehicle tyre 10 into the green tyre 40B as shown from Fig. 4b) to Fig. 4c), inflating the curing bladder 470C, heating the curing press, and particularly the curing mould 460C, using, for example electricity or steam, particularly super-heated steam, at a curing temperature for a curing period, deflating and removing the curing bladder 470C, and releasing, i. e. removing, the vehicle tyre 10 from the curing press. During the heating, the layers are bonded, and a tread on an outer circumference of the vehicle tyre 10 is formed by indentations (not shown) of the curing mould 460C. An outer surface of the curing bladder 470C, facing the inner side of the green tyre 40C, may comprise a surface structure for deairing a space substantially defined by the green tyre 40C and the curing bladder 470C during inflation of the curing bladder 470C. Curing may further comprise, at a suitable point in time prior to heating the curing press, at least partially applying a release agent (not shown), for example a silicone-based release agent, to the green tyre 40A, 40B, 40C, the curing mould 460A, 460B, 460C, the curing bladder 470A, 470B, 470C, or a combination thereof. The release agent separates the tyre 40C from the curing mould 460C and curing bladder 470C, and eases the release of the tyre 40C from the curing press, i. e. the curing mould 460C and curing bladder 470C. The curing is according to the specification of the vehicle tyre 10. The curing temperature is in the range between approximately 100 °C and 250 °C, for example between approximately 110 °C and 200 °C, preferably between approximately 120 °C and 180 °C, more preferably approximately 140 °C. The curing period in the range between approximately 5 min and 60°min, for example between approximately 10 min and 50 min, preferably between approximately 20 min and 40 °C, more preferably approximately 30 min.

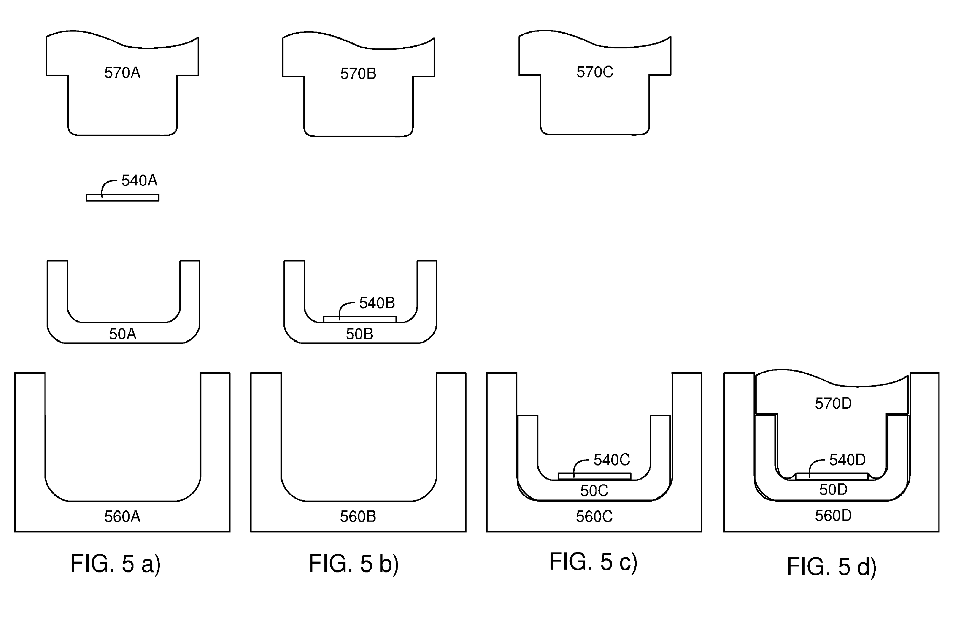

Figs 5a), 5b), 5c) and 5d) show simplified, partial cross-sectional views of curing of a green tyre 50A, 50B, 50C, 50D according to another embodiment of the invention. Curing the green tyre 50A, 50B, 50C, 50D in the curing press into the vehicle tyre 10 comprises inserting a removable layer 540A into the green tyre 50A as shown from Fig. 5a) to Fig. 5b), after the removable layer 540B is placed in the green tyre 50B, inserting the green tyre 50B into the curing mould 560B as shown from Fig. 5b) to Fig. 5c), inserting the curing bladder 570C into the green tyre 50C as shown from Fig. 5c) to Fig. 5d), inflating the curing bladder 570D, heating the curing press, and particularly the curing mould 560D, deflating and removing the curing bladder 570D, and releasing the vehicle tyre 10 from the curing press as described with reference to Fig. 4.

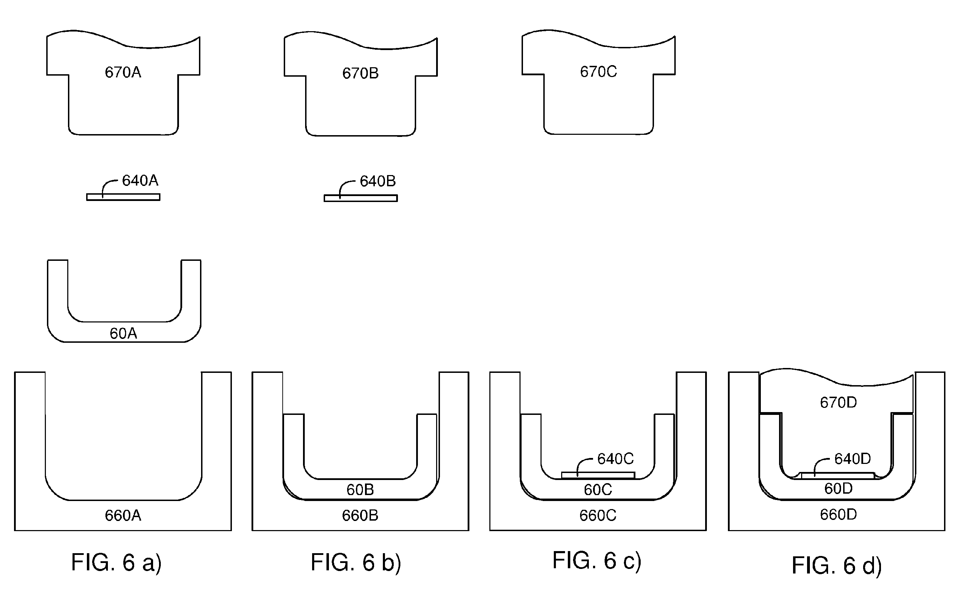

Figs 6a), 6b), 6c) and 6d) show simplified, partial cross-sectional views of curing of a green tyre 60A, 60B, 60C, 60D according to yet another embodiment of the invention. Curing the green tyre 60A, 60B, 60C, 60D in the curing press into the vehicle tyre 10 comprises inserting the green tyre 60A into the curing mould 660A as shown from Fig. 6a) to Fig. 6b), after the green tyre 60B is placed in the curing mould 660B, inserting a removable layer 640B into the green tyre 60B as shown from Fig. 6b) to Fig. 6c), inserting the curing bladder 670C into the green tyre 60C as shown from Fig. 6c) to Fig. 6d), inflating the curing bladder 670D, heating the curing press, and particularly the curing mould 660D, deflating and removing the curing bladder 670D, and releasing the vehicle tyre 10 from the curing press as described with reference to Fig. 4.

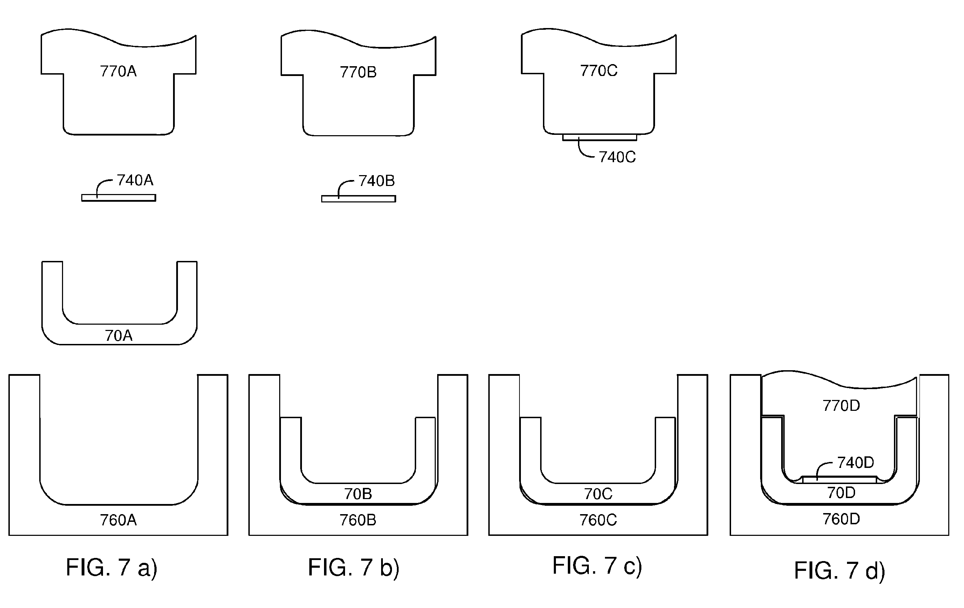

Figs 7a), 7b), 7c) and 7d) show simplified, partial cross-sectional views of curing of a green tyre 70A, 70B, 70C, 70D according to yet another embodiment of the invention. Curing the green tyre 70A, 70B, 70C, 70D in the curing press into the vehicle tyre 10 comprises inserting the green tyre 70A into the curing mould 760A as shown from Fig. 7a) to Fig. 7b), subsequently placing a removable layer 740B onto the curing bladder 770B as shown from Fig. 7b) to Fig. 7c), inserting the curing bladder 770C into the green tyre 70C as shown from Fig. 7c) to Fig. 7d), inflating the curing bladder 770D, heating the curing press, and particularly the curing mould 760D, deflating and removing the curing bladder 770D, and releasing the vehicle tyre 10 from the curing press as described with reference to Fig. 4. In an alternative embodiment of the invention, the curing the green tyre 70A, 70B, 70C, 70D in the curing press into the vehicle tyre 10 may comprise placing a removable layer 740B onto the curing bladder 770B and subsequently inserting the green tyre 70A into the curing mould 760A. In another embodiment of the invention, the removable layer is placed in the curing mould.

As a consequence of locating the removable layer between a surface area of the vehicle tyre 10; 20; 30; 40; 50; 60; 70; 80 and the curing bladder or the curing mould, the surface area of the vehicle tyre 10; 20; 30; 40; 50; 60; 70; 80 is textured, surface roughness is increased, and, as a result, an active surface, that can take part in a process, for example a chemical process, is increased for a given size of surface area of the vehicle tyre 10; 20; 30; 40; 50; 60; 70; 80, bonding is improved, release agents may be saved. As a further consequence, roughening of the surface area may not be necessary, and, as a result, time is saved, cleaning agent is saved, environmental protection and employment protection are improved, risk of damaging the vehicle tyre 10 as well as resulting material defect liability and product liability may be avoided, and, ultimately, costs relating to manufacturing of the vehicle tyre 10 are reduced.

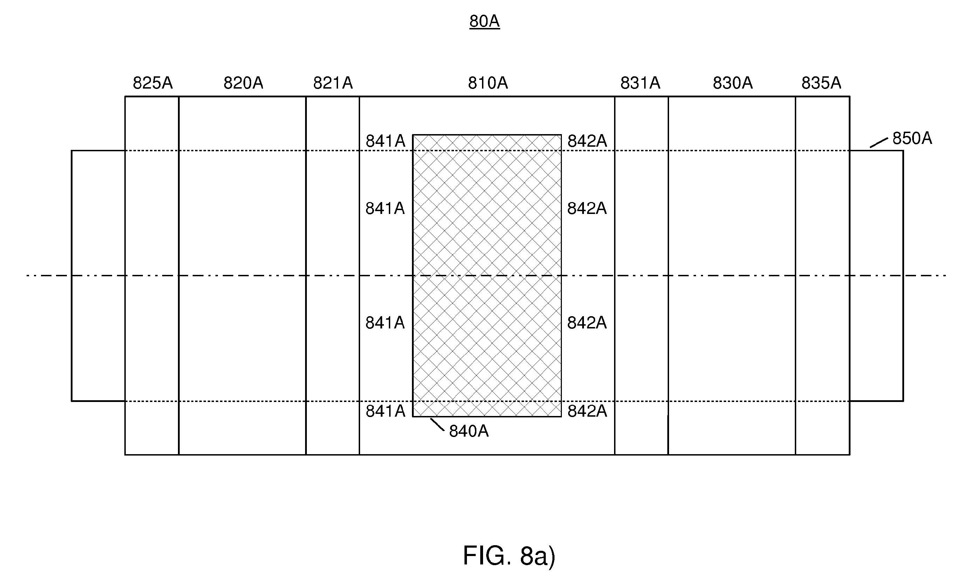

Figs 8a) and 8b) show schematic views of an expandable textile as a removable layer according to the preferred embodiment of the invention. In Fig. 8a), areas 825A, 820A, 821A, 810A, 831A, 830A, 835A of the green tyre 80A, 80B becoming first bead portion 825B, first sidewall portion 820B, first shoulder portion 821B, circumferential tread surface 810B, second shoulder portion 831B, second sidewall portion 830B and second bead portion 835B, respectively, are axially lined up along the tyre-building drum 850A and have approximately same diameters. In the preferred embodiment of the invention directed to mounting a delimiter onto the inner liner, locating the removable layer 840A, 840B between a surface area of the green tyre 80A, 80B and a curing bladder preferably comprises initially placing an expandable textile, i. e. woven fabric, made of rayon on the tyre-building drum 850A where the inner liner will be placed before is the green tyre 80A, 80B is built as a series of layers, and the method further comprises, after curing of the vehicle tyre 80A, 80B, removing the textile from the vehicle tyre 80A, 80B for activating the surface area of the inner liner covered by the textile, and mounting the delimiter onto the activated surface area of the inner liner 140. The delimiter may be made of cellular material, for example foam material, preferably porous foam material.

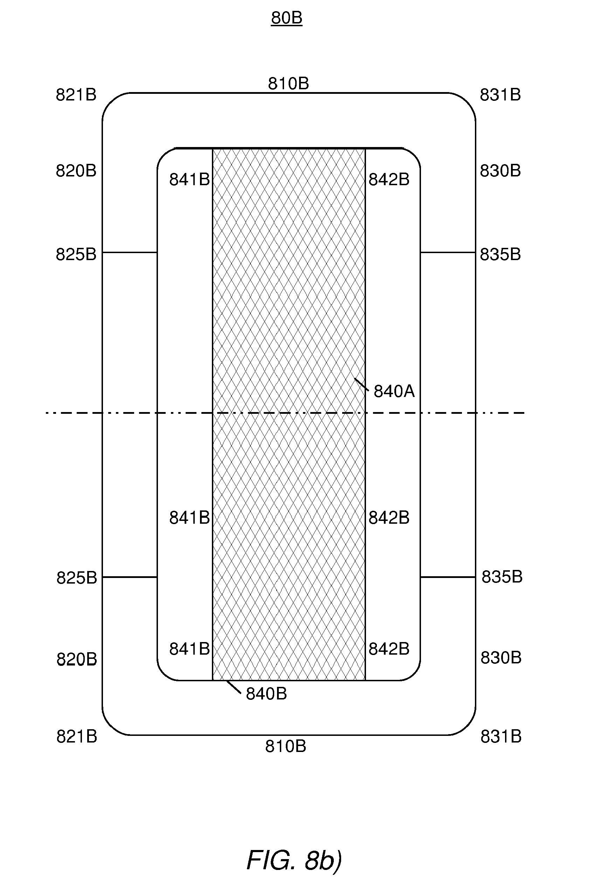

In the preferred embodiment of the invention the removable layer 840A, 840B is located in the vehicle tyre 80A, 80B, such that a first direction of the textile, i. e. a first running direction of threads, for example warp threads 841A, 841B, of the textile, is approximately diagonal to a running direction of the vehicle tyre 80A, 80B and a second direction of the textile, i. e. a second running direction of threads, for example weft or filling threads 842A, 842B, of the textile, is approximately diagonal to the running direction of the vehicle tyre 80A, 80B as indicated by squares in the textile of Fig. 8a), such that both expandability in the first direction and expandability in the second direction is utilized for adapting to expansion of vehicle tyre 80A, 80B during manufacturing as indicated by rhombi, representing diagonally expanded squares, in the textile of Fig. 8b).

In an embodiment of the invention, the surface area of the vehicle tyre 10; 20; 30; 40; 50; 60; 70; 80 is on an interior surface 140 of the vehicle tyre 10; 20; 30; 40; 50; 60; 70; 80. As a result, cleaning of the interior surface, that may be difficult and cumbersome, may be avoided.

In an embodiment of the invention, the surface area of the vehicle tyre 10; 20; 30; 40; 50; 60; 70; 80 is on the inner liner of the vehicle tyre 10; 20; 30; 40; 50; 60; 70; 80. As a result, a part, for example a delimiter, a noise-reduction layer, a repair patch or a balance pad, may be mounted onto the inner liner.

In another embodiment of the invention, the removable layer 240; 340; 440; 540; 640; 740; 840 comprises a second structured surface facing the curing mould 460; 560; 660; 760, or the curing bladder 470; 570; 670; 770. As a consequence, deairing between the vehicle tyre 10; 20; 30; 40; 50; 60; 70; 80 and the curing mould 460; 560; 660; 760 or the curing bladder 470; 570; 670; 770 during curing is simplified. As a result, surface structure and construction of the curing mould 460; 560; 660; 760 or the curing bladder 470; 570; 670; 770 may be simplified. As a further result, wear and tear of the curing bladder 470; 570; 670; 770 may be reduced, and costs relating to the curing bladder 470; 570; 670; 770 may be reduced.

In another embodiment of the invention, the removable layer 240; 340; 440; 540; 640; 740; 840 is expandable by a factor between approximately 2 and approximately 10, for example between approximately 4 and approximately 8, preferably approximately 6. As a result, the removable layer 240; 340; 440; 540; 640; 740; 840 may adapt to expansion of vehicle tyre 10; 20; 30; 40; 50; 60; 70; 80 during manufacturing. The expansion may relate to a circumference or a diameter of the vehicle tyre 10; 20; 30; 40; 50; 60; 70; 80.

In another embodiment of the invention, the removable layer 240; 340; 440; 540; 640; 740; 840 is expandable in a first direction; or the removable layer 240; 340; 440; 540; 640; 740; 840 is expandable in a second direction; both.

In another embodiment of the invention, the first direction is approximately perpendicular to the second direction.

In another embodiment of the invention, the removable layer 240; 340; 440; 540; 640; 740; 840 is located in or on the vehicle tyre 10; 20; 30; 40; 50; 60; 70; 80, such that the first direction is approximately along a running direction of the vehicle tyre 10; 20; 30; 40; 50; 60; 70; 80; or the removable layer 240; 340; 440; 540; 640; 740; 840 is located in or on the vehicle tyre 10; 20; 30; 40; 50; 60; 70; 80, such that the second direction is approximately perpendicular to the running direction of the vehicle tyre 10; 20; 30; 40; 50; 60; 70; 80; or both.

In another embodiment of the invention, the removable layer 240; 340; 440; 540; 640; 740; 840 is located in or on the vehicle tyre 10; 20; 30; 40; 50; 60; 70; 80, such that the first direction is approximately diagonal to a running direction of the vehicle tyre; or the removable layer 240; 340; 440; 540; 640; 740; 840 is located in or on the vehicle tyre 10; 20; 30; 40; 50; 60; 70; 80, such that the second direction is approximately diagonal to the running direction of the vehicle tyre 10; 20; 30; 40; 50; 60; 70; 80; or both. As a result, both expandability in the first direction and expandability in the second direction may be utilized for adapting to expansion of vehicle tyre 10; 20; 30; 40; 50; 60; 70; 80 during manufacturing.

In another embodiment of the invention, the removable layer 240; 340; 440; 540; 640; 740; 840 is disposable, preferably easily disposable.

In another embodiment of the invention, the removable layer 240; 340; 440; 540; 640; 740; 840 is a fabric, for example a textile, such as a cloth; and the first structured surface is structured by the fabric. The fabric may be woven, and comprise warp threads 841A, 841B, and weft or filling threads 842A, 842B. The warp threads 841A, 841B, and weft or filling threads 842A, 842B may have a yearn count between approximately 11 dtex and approximately 99 dtex, for example between approximately 22 dtex and approximately 66 dtex, preferably approximately 44 dtex with 10 dtex = 1 tex = 1 g/km (= approximately 9 Denier). In another embodiment of the invention, the removable layer 240; 340; 440; 540; 640; 740; 840 is a sheet, for example a foil, such as a film; and the first structured surface is structured by forming the sheet, or particles, such as nano particles, deposited on the sheet. The removable layer 240; 340; 440; 540; 640; 740; 840 may be endless, possibly spooled material, or tailored, for example pre-cut, material.

In another embodiment of the invention, the removable layer 240; 340; 440; 540; 640; 740; 840 comprises natural fibres, for example cellulose fibres, such as cotton fibres.

In another embodiment of the invention, the removable layer 240; 340; 440; 540; 640; 740; 840 comprises synthetic material, for example synthetic fibres, preferably lactam-based fibres or cellulose-based fibres, such as rayon fibres. As a consequence, the removable layer 240; 340; 440; 540; 640; 740; 840 may remain in the vehicle tyre 10; 20; 30; 40; 50; 60; 70; 80 until need arises, for example before a repair patch is mounted for repairing the vehicle tyre 10; 20; 30; 40; 50; 60; 70; 80.

In another embodiment of the invention, the removable layer 240; 340; 440; 540; 640; 740; 840 comprises metal, for example metal fibres or filaments, preferably brass filaments or steel filaments, such as stainless-steel filaments.

In another embodiment of the invention, the removable layer 240; 340; 440; 540; 640; 740; 840 is impenetrable for release agents, for example silicone-based release agents.

In another embodiment of the invention, the removable layer 240; 340; 440; 540; 640; 740; 840 is impregnated with a release agent, for example a silicone-based release agent.

In another embodiment of the invention, the first structured surface is impregnated with the release agent; or the second structured surface is impregnated with the release agent; or both.

In another embodiment of the invention, the removable layer 240; 340; 440; 540; 640; 740; 840 is placed on a tyre-building drum 250A; 350B; 850A.

In another embodiment of the invention, the removable layer is initially placed on the tyre-building drum 250A; 350A; 850A before is the vehicle tyre 10; 20; 30; 40; 50; 60; 70; 80 is built as a series of layers.

In another embodiment of the invention, the removable layer 240; 340; 440; 540; 640; 740; 840 is initially placed on a first layer, for example an inner liner, of the series of layers; and the removable layer 240; 340; 440; 540; 640; 740; 840 is placed on the tyre-building drum 250A; 350A; 850A together with the first layer.

In another embodiment of the invention, a first end of the removable layer 240; 340; 440; 540; 640; 740; 840 overlaps a second end of the removable layer 240; 340; 440; 540; 640; 740; 840. As a result, removal of the removable layer 240; 340; 440; 540; 640; 740; 840 is simplified.

In another embodiment of the invention, the removable layer 240; 340; 440; 540; 640; 740; 840 remains in the vehicle tyre until the surface area of the vehicle tyre 10; 20; 30; 40; 50; 60; 70; 80 is used. As a result, influence of dirt, dust, humidity and oxidation may be impaired or at least reduced.

In another embodiment of the invention, the method further comprises removing the removable layer 240; 340; 440; 540; 640; 740; 840 from the vehicle tyre 10; 20; 30; 40; 50; 60; 70; 80. As a result, the surface area of the vehicle tyre 10; 20; 30; 40; 50; 60; 70; 80 is activated.

In another embodiment of the invention, the surface area of the vehicle tyre 10; 20; 30; 40; 50; 60; 70; 80 is structured for mounting a part, for example a delimiter, a noise-reduction layer, a repair patch or a balance pad, to the surface area of the vehicle tyre 10; 20; 30; 40; 50; 60; 70; 80.

In another embodiment of the invention, the method further comprises mounting the part to the surface area of the vehicle tyre 10; 20; 30; 40; 50; 60; 70; 80. As a consequence, bonding between the surface area of the vehicle tyre 10; 20; 30; 40; 50; 60; 70; 80 and the part is improved owing to an increased active surface resulting from an increased surface roughness.

In another embodiment of the invention, the surface area of the vehicle tyre 10; 20; 30; 40; 50; 60; 70; 80 is structured for accommodating a balancing substance, for example a thixotropic balancing substance. As a consequence, movability of the balancing substance may be improved.

In another embodiment of the invention, the surface area of the vehicle tyre 10; 20; 30; 40; 50; 60; 70; 80 indicates structural features of the vehicle tyre 10; 20; 30; 40; 50; 60; 70; 80; for example where the vehicle tyre 10; 20; 30; 40; 50; 60; 70; 80 may be repaired, invariable features of the vehicle tyre 10; 20; 30; 40; 50; 60; 70; 80, for example make or type or size or mould serial number or, preferably, a combination thereof, or variable features of the vehicle tyre 10; 20; 30; 40; 50; 60; 70; 80, for example manufacturing date or batch number or both. As a consequence, the method may provide an inexpensive, flexible and secure means of marking the vehicle tyre 10; 20; 30; 40; 50; 60; 70; 80.

A further aspect of the invention is an apparatus for manufacturing a vehicle tyre 10; 20; 30; 40; 50; 60; 70; 80 according to the method.

Yet a further aspect of the invention is a system for manufacturing a vehicle tyre 10; 20; 30; 40; 50; 60; 70; 80 according to the method.

Yet a further aspect of the invention is a vehicle tyre 10; 20; 30; 40; 50; 60; 70; 80 manufactured according to the method.

The process of manufacturing the vehicle tyre 10; 20; 30; 40; 50; 60; 70; 80 may be implemented as automatic manufacturing, for example computer-aided manufacturing (CAM), particularly small and compactly modular, highly computer-aided manufacturing, more particularly Modular Integrated Robotized System (MIRS)-technology.

Although specific embodiments have been illustrated and described herein, it will be appreciated by those of ordinary skill in the art, that any arrangement which is calculated to achieve the same purpose may be substituted for the specific embodiments shown. It is to be understood, that the above description is intended to be illustrative and not restrictive. This application is intended to cover any adaptations or variations of the invention. Combinations of the above embodiments and many other embodiments will be apparent to those of skill in the art upon reading and understanding the above description. The scope of the invention includes any other embodiments and applications in which the above structures and methods may be used. The scope of the invention should, therefore, be determined with reference to the appended claims, along with the full scope of equivalents to which such claims are entitled.

## Claims

1. A method of manufacturing a vehicle tyre (10; 20; 30; 40; 50; 60; 70; 80), wherein:
- a removable layer (240; 340; 440; 540; 640; 740; 840) is located between a surface area of the vehicle tyre (10; 20; 30; 40; 50; 60; 70; 80) and a curing mould (460; 560; 660; 760) or a curing bladder (470; 570; 670; 770) forming a hollow of the vehicle tyre (10; 20; 30; 40; 50; 60; 70; 80);
**characterized in that**:
- the removable layer (240; 340; 440; 540; 640; 740; 840) comprises a first structured surface facing the surface area of the vehicle tyre (10; 20; 30; 40; 50; 60; 70; 80); and
- the first structured surface imprints the surface area of the vehicle tyre (10; 20; 30; 40; 50; 60; 70; 80).

2. The method of claim 1, wherein:
- the surface area of the vehicle tyre (10; 20; 30; 40; 50; 60; 70; 80) is on an interior surface 140 of the vehicle tyre (10; 20; 30; 40; 50; 60; 70; 80); and
- particularly,
- the surface area of the vehicle tyre (10; 20; 30; 40; 50; 60; 70; 80) is on an inner liner of the vehicle tyre (10; 20; 30; 40; 50; 60; 70; 80).

3. The method of claim 1 or 2, wherein:
- the removable layer (240; 340; 440; 540; 640; 740; 840) comprises a second structured surface facing the curing mould (460; 560; 660; 760) or the curing bladder (470; 570; 670; 770).

4. The method of one of claims 1 to 3, wherein:
- the removable layer (240; 340; 440; 540; 640; 740; 840) is expandable by a factor between approximately 2 and approximately 10, for example between approximately 4 and approximately 8, preferably approximately 6; and
- particularly,
- the removable layer (240; 340; 440; 540; 640; 740; 840) is expandable in a first direction; or
- the removable layer (240; 340; 440; 540; 640; 740; 840) is expandable in a second direction; or
- both; and
- more particularly,
- the first direction is approximately perpendicular to the second direction; and
- even more particularly,
- the removable layer (240; 340; 440; 540; 640; 740; 840) is located in or on the vehicle tyre (10; 20; 30; 40; 50; 60; 70; 80), such that the first direction is approximately along a running direction of the vehicle tyre (10; 20; 30; 40; 50; 60; 70; 80); or
- the removable layer (240; 340; 440; 540; 640; 740; 840) is located in or on the vehicle tyre (10; 20; 30; 40; 50; 60; 70; 80), such that the second direction is approximately perpendicular to the running direction of the vehicle tyre (10; 20; 30; 40; 50; 60; 70; 80); or
- both;
- or
- the removable layer (240; 340; 440; 540; 640; 740; 840) is located in or on the vehicle tyre (10; 20; 30; 40; 50; 60; 70; 80), such that the first direction is approximately diagonal to a running direction of the vehicle tyre (10; 20; 30; 40; 50; 60; 70; 80); or
- the removable layer (240; 340; 440; 540; 640; 740; 840) is located in or on the vehicle tyre (10; 20; 30; 40; 50; 60; 70; 80), such that the second direction is approximately diagonal to the running direction of the vehicle tyre (10; 20; 30; 40; 50; 60; 70; 80); or
- both.

5. The method of one of claims 1 to 4, wherein:
- the removable layer (240; 340; 440; 540; 640; 740; 840) is disposable, preferably easily disposable; or
- the removable layer (240; 340; 440; 540; 640; 740; 840) is a fabric, for example a textile, such as a cloth; and the first structured surface is structured by the fabric; or
- the removable layer (240; 340; 440; 540; 640; 740; 840) is a sheet, for example a foil, such as a film; and the first structured surface is structured by
- forming the sheet, or
- particles, such as nano particles, deposited on the sheet.

6. The method of one of claims 1 to 5, wherein:
- the removable layer (240; 340; 440; 540; 640; 740; 840) comprises natural fibres, for example cellulose fibres, such as cotton fibres; or
- the removable layer (240; 340; 440; 540; 640; 740; 840) comprises synthetic material, for example synthetic fibres, preferably lactam-based fibres or cellulose-based fibres, such as rayon fibres; or
- the removable layer (240; 340; 440; 540; 640; 740; 840) comprises metal, for example metal fibres or filaments, preferably brass filaments or steel filaments, such as stainless-steel filaments; or
- the removable layer (240; 340; 440; 540; 640; 740; 840) comprises a combination thereof.

7. The method of one of claims 1 to 6, wherein:
- the removable layer (240; 340; 440; 540; 640; 740; 840) is impenetrable for release agents, for example silicone-based release agents; or
- the removable layer (240; 340; 440; 540; 640; 740; 840) is impregnated with a release agent, for example a silicone-based release agent;
- particularly,
- the first structured surface is impregnated with the release agent; or
- the second structured surface is impregnated with the release agent; or
- both; or
both.

8. The method of one of claims 1 to 7, wherein:
- the removable layer (240; 340; 840) is placed on a tyre-building drum (250A; 350A; 850A);
- particularly,
- the removable layer (240; 340; 840) is initially placed on the tyre-building drum (250A; 350A; 850A) before is the vehicle tyre (20; 30; 80) is built as a series of layers; or
- the removable layer (240; 340; 840) is initially placed on a first layer, for example an inner liner, of the series of layers; and
- the removable layer (240; 340; 840) is placed on the tyre-building drum (250A; 350A; 850A) together with the first layer; or
- the removable layer (240; 340; 440; 540; 640; 740; 840) is placed in the vehicle tyre (10; 20; 30; 40; 50; 60; 70; 80); or
- the removable layer (440; 540; 640; 740) is placed in the curing mould (460; 560; 660; 760) or on the curing bladder (470; 570; 670; 770).

9. The method of one of claims 1 to 8, wherein:
- a first end of the removable layer (240; 340; 440; 540; 640; 740; 840) overlaps a second end of the removable layer (240; 340; 440; 540; 640; 740; 840).

10. The method of one of claims 1 to 9, wherein:
- the removable layer (240; 340; 440; 540; 640; 740; 840) remains in the vehicle tyre (10; 20; 30; 40; 50; 60; 70; 80) until the surface area of the vehicle tyre (10; 20; 30; 40; 50; 60; 70; 80) is used.

11. The method of one of claims 1 to 10, further comprising:
- removing the removable layer (240; 340; 440; 540; 640; 740; 840) from the vehicle tyre (10; 20; 30; 40; 50; 60; 70; 80).

12. The method of one of claims 1 to 11, wherein:
- the surface area of the vehicle tyre (10; 20; 30; 40; 50; 60; 70; 80) is structured for mounting a part, for example a delimiter, a noise-reduction layer, a repair patch or a balance pad, to the surface area of the vehicle tyre (10; 20; 30; 40; 50; 60; 70; 80);
- particularly,
- the method further comprising mounting the part to the surface area of the vehicle tyre (10; 20; 30; 40; 50; 60; 70; 80); or
- the surface area of the vehicle tyre (10; 20; 30; 40; 50; 60; 70; 80) is structured for accommodating a balancing substance, for example a thixotropic balancing substance; or
- the surface area of the vehicle tyre (10; 20; 30; 40; 50; 60; 70; 80) indicates structural features of the vehicle tyre (10; 20; 30; 40; 50; 60; 70; 80), for example where the vehicle tyre (10; 20; 30; 40; 50; 60; 70; 80) may be repaired, invariable features of the vehicle tyre (10; 20; 30; 40; 50; 60; 70; 80), for example make or type or size or mould serial number or, preferably, a combination thereof, or variable features of the vehicle tyre (10; 20; 30; 40; 50; 60; 70; 80), for example manufacturing date or batch number or both; or
- a combination thereof.

13. An apparatus for manufacturing a vehicle tyre (10; 20; 30; 40; 50; 60; 70; 80) according to the method of one of claims 1 to 12.

14. A system for manufacturing a vehicle tyre (10; 20; 30; 40; 50; 60; 70; 80) according to the method of one of claims 1 to 12.

15. A vehicle tyre (10; 20; 30; 40; 50; 60; 70; 80) manufactured according to the method of one of claims 1 to 12.
